# EUROPEAN PATENT SPECIFICATION

(11) **EP 3 665 420 B1**
(45) Date of publication and mention of the grant of the patent: **10.04.2024**
(21) Application number: 18716377.9
(22) Date of filing: 28.02.2018
(51) Int. Cl.: F24D 3/14

(54) **FLOOR HEATING MAT, FLOOR PROVIDED THEREWITH, AND DEVICE AND METHOD FOR MANUFACTURE**
FUSSBODENHEIZMATTE, DAMIT AUSGESTATTETER FUSSBODEN SOWIE VORRICHTUNG UND VERFAHREN ZUR HERSTELLUNG
TAPIS CHAUFFANT DE PLANCHER, PLANCHER ÉQUIPÉ DE CELUI-CI, ET DISPOSITIF ET PROCÉDÉ DE FABRICATION

(30) Priority: 08.08.2017 NL 2019402; 16.10.2017 NL 2019734
(43) Date of publication of application: 17.06.2020
(73) Proprietor: Van Losser Investments B.V., 7461 AD Rijssen (NL)
(72) Inventor: LAST, Vidar Johan, 8266 JE Kampen (NL)
(74) Representative: Arnold & Siedsma
(86) International application number: PCT/NL2018/050125
(87) International publication number: WO 2019/031962

(56) References cited:
- EP-A1- 1 457 742
- EP-A1- 1 610 064
- EP-A2- 0 816 764
- EP-A2- 2 256 419
- CN-A- 106 193 522
- DE-A1- 10 002 250
- DE-A1- 10 020 843

## Description

The invention relates to a floor heating mat for realizing floor heating and/or floor cooling. The floor heating mat relates particularly to a system suitable for passage of a heat transport medium such as water and/or glycol.

EP 2 256 419 A2 relates to a system having a prefabricated heating element comprising loop-like round- and/or oval tubes between web grid carrier mats and alternately running at middle of the heating element for engaging a longitudinal-sided intermediate space. The tubes are provided for flowing with warm water in an opposite or parallel flow direction. The tubes are arranged between the mats such that the tubes alternately run at breadth of the mats and lie adjacent to each other in the middle of the element. The tubes form opposite or parallel flowing water bodies ending at flow- and return lines. It is known in practice to install floor heating by casting a conduit system into a ground surface, particularly into a sub-floor. The system comprises a number of conduits or tubes which are usually arranged on a carrying construction, such as a carrier mat of a mesh material. The conduits are connected to a manifold of the heating system.

This installing of conventional floor heating is relatively labour-intensive and usually takes place on site, both in the case of construction of new buildings and of renovation. This means that this work is not carried out under optimal working conditions, nor under controlled (ambient) conditions. This increases the chance of errors. In addition, there is less control over the correct installation of conduits, which makes it possible that cold corners are created in a floor in the case of incorrect installation.

An object of the invention is to obviate or reduce one or more of the above stated problems.

This object is achieved with the floor heating mat for floor heating and/or floor cooling according to claim 1.

By providing a roll-up carrier mat, particularly a mesh construction which can be arranged in a ground surface, such a carrier mat for a floor heating mat can be stored and transported relatively easily and in practice be applied in simple manner by unrolling the carrier mat. According to the invention, conduits are arranged on the carrier mat prior to placing of the carrier mat. This makes it possible to arrange the conduits in a factory prior to transport to the relevant construction site where the floor heating has to be arranged. This enables production under controlled conditions. This also reduces the risk of errors during installation. Such errors could after all have significant consequences if they were to be discovered only after pouring of the floor or even arranging of an upper floor. This avoids the possibility of local cold spots being created due to a less than optimal positioning of the conduits. This enables a better conditioning of the building in which the floor heating mat according to the invention is applied.

By arranging conduits on the carrier mat it is possible to provide a plurality of sections or parts on a single carrier mat. These sections for instance relate to separate spaces in a building. Sections can be sub-divided into sub-sections of parts of the floor heating mat to be installed adjacently of each other in the same space. Dimensions can be adjusted hereto. A smaller width of for instance 1.0 metre can thus for instance also be applied during the production process in order to manufacture floor heating mats which are for instance adapted to kitchen dimensions. This further increases the flexibility of the floor warming mat according to the invention.

Providing a cuttable and foldable carrier mat makes it possible to cut into sections, particularly sub-sections, of the mat, such that a part of the mat can be folded away. It is thus for instance possible to cut through the longitudinally extending individual wires of the carrier mat at a determined position, wherein one wire optionally remains intact. This one wire can further be bent, whereby the remainder of the carrier mat can as it were be folded away, particularly in relation to a substantially flat surface of the mat, whereby uninterrupted installation of the mat is possible in simple manner.

Providing the floor heating mat according to the invention with an extended or enlarged loop at or close to a transition to a subsequent sub-section makes it possible to perform this folding of the carrier mat without the conduit having to be cut through or otherwise interrupted. Such an extended or enlarged loop is also referred to as folding loop. With such a folding loop the conduit remains an uninterrupted, continuous conduit, wherein no additional couplings need be arranged. Because no couplings need be arranged, the floor heating mat can be placed in a relatively short amount of time. In addition, this enormous reduction in couplings required results in an additional saving in material costs. The risk of leaks due to an incorrect coupling is further also greatly reduced by the reduction of the number of couplings.

An additional advantage is that providing an enlarged loop or folding loop at the position of a transition makes it extra clear to a fitter or other user of the floor heating mat how the mat should be placed in a space and where the carrier mat must be cut into and optionally folded. This provides additional control over a correct placing of the floor heating mat according to the invention. This is made possible in particular in that the floor heating mat is preferably made to specification especially for an intended building. In the case of a house or apartment it is thus for instance possible to measure the separate spaces which have to be provided with floor heating, or even to send the construction drawings directly to the production location of the floor heating mat, whereby the floor heating mat can be manufactured to specification. The floor heating mat can hereby be directly manufactured already having the desired dimensions so that the work required can be reduced further. This increases the above stated advantages still further.

The conduit is for instance a conduit of cross-linked polyethylene or PE-RT which, if desired, can be coupled to other conduits and/or a manifold of a floor heating system. Use can for instance be made here of so-called compression sleeve or crimp ring fittings.

Providing a roll-up carrier mat achieves that it can be transported to a buyer and end user as a whole in effective manner. This enables efficient storage and transport. If desired, it is possible to provide a plurality of spaces or buildings with floor heating mats which are supplied on a single roll.

The carrier mat is preferably cuttable with a hand tool, such that this can be performed in simple manner by a fitter or other user. This makes it possible to adapt the carrier mat and the conduit attached thereto to the space during the installation work if necessary. It can thus for instance be adapted to a corner of the space or be installed around a pillar of a building.

The carrier mat is for instance a mesh construction which on the one hand is stable enough to carry the conduits arranged thereon and on the other hand is flexible enough to be rolled up and cut into. In a currently preferred embodiment the required force which has to be exerted on the carrier mat for the cutting through is less than 500 N, preferably less than 300 N and more preferably less than 100 N. Use can be made here of so-called side cutting pliers or centre cutting pliers. The material of the carrier mat is for instance a metal with a wire thickness of 1 to 3 mm. The mesh width of the carrier mat preferably lies in the range of 5 to 20 cm, the mesh width more preferably amounting to about 15 cm.

In a currently preferred embodiment the carrier mat is provided with a mesh or grid structure comprising longitudinal wires and transverse wires provided with a diameter in the range of 0.5 to 5.0 mm, preferably in the range of 1.0 to 3.0 mm. It has been found that application of such diameters provides a carrier mat which can be rolled up in practice, and a construction which is sufficiently stable and rigid after installation. The diameter of the longitudinal wire is preferably smaller than the diameter of the transverse wire. This improves the possibility of rolling up the carrier mat for storage and transport, while stability and rigidity are maintained after placing. Alternatively and preferably additionally, the longitudinal wires and transverse wires are provided with material properties which differ to some extent by using different materials, including alloys. The longitudinal wire preferably takes a thinner and softer form than the transverse wire. This improves the flexibility for storage and transport and maintains stability and rigidity after placing.

The metal is for instance a zinc-plated metal, such as zinc-plated steel or zinc-plated iron, or a galvanized metal such as galvanized steel or galvanized iron. Alternatively, use can also be made of a plastic carrier mat of for instance polyethylene, polypropylene, polyvinyl chloride, chlorinated polyvinyl chloride and/or plastic film, such as polyethylene film. The carrier mat can be embodied as an uninterrupted carrier or, in a currently preferred embodiment, as a mesh-like carrier. Further alternative materials are also possible according to the invention, including rubber, textile, bamboo and/or reed.

The conduit is particularly suitable for transport of a heating liquid and/or a cooling liquid. For a heating application use can additionally or alternatively be made of an electrical heating cable, for instance in a double meander form with a folding loop. It is possible here to realize a combination of liquid transport, for instance for cooling, and electric heating.

The floor heating mat can be applied on or in a floor. Such a floor is for instance a ground floor, storey floor, cellar floor.

In a currently preferred embodiment the floor heating mat comprises a second conduit arranged thereon prior to placing of the carrier mat in or on the ground surface.

By providing a second conduit more effective heating and/or cooling can be realized. The two conduits are preferably attached meandering to the carrier mat.

In a currently preferred embodiment this means that the two conduits are attached looped within each other to the carrier mat. The two conduits here remain at a mutual distance from each other. The centre-to-centre distance of two adjacent conduits attached transversely to the carrier mat preferably lies in the range of 10 to 20 cm. The specific distance of course depends per case on, among other factors, the desired heat management. The production process can here be performed in efficient manner, wherein the conduits are arranged simultaneously and preferably in single or double meander form on the carrier mat.

Because the floor part is provided as a prefabricated element, the conduits can be installed in the meandering pattern in a single operation. This saves time during installation. During use the two outer ends of each conduit are connected to a manifold of the floor heating or cooling. The two outer ends of the first conduit are connected as a first group of the manifold and the two outer ends of the second conduit are connected as a second group of the manifold. The conduits are connected here such that the flows of the heat transport medium through the conduits are preferably in opposite direction during use. The conduit parts of the first conduit which supply hot transport medium hereby lie adjacently of the conduit parts of the second conduit which feed back cooled transport medium. The floor temperature is hereby substantially the same everywhere. This in contrast to conventional systems with a single meandering conduit in which the floor temperature varies over the floor surface.

The efficiency of the floor heating/cooling is moreover hereby increased. Because the floor heating/cooling is more efficient, it moreover becomes possible to lay more metres of conduit system than in conventional systems. In conventional systems in which a single meandering conduit is provided, the maximum conduit length is about 100 metres. With the invention however the conduit length of each conduit can be about 140 metres. Since two conduits are applied on the carrier mat, an overall gain of 80 metres can be realized per floor part. A large number of square metres of floor heating/floor cooling can therefore be laid in a short period of time with the floor part according to the invention.

A further additional advantage of a double meander form is that it is possible to process a higher capacity in a given (floor) area in effective manner. This is for instance effective for a bathroom in which a somewhat higher capacity is usually desired.

In a preferred embodiment each of the first conduit and the second conduit comprises a meandering pattern of alternately a left-hand loop and a right-hand loop, wherein the left-hand loop of the one conduit is arranged in the left-hand loop of the other conduit, while the right-hand loop of the other conduit is arranged in the right-hand loop of the one conduit.

A left-hand loop is understood to mean a first conduit part which extends in transverse direction and which is connected via a bend to a second conduit part extending in transverse direction, wherein the bend is located on the left-hand side. It is noted that the bend in the left-hand loop is a bend to the right. In similar manner a right-hand loop is understood to mean a first conduit part which extends in transverse direction and which is connected via a bend to a second conduit part extending in transverse direction, wherein the bend is located on the right-hand side.

The left-hand loop of the one conduit is arranged in each case in the right-hand loop of the other conduit so that the pattern is formed where they meander collectively.

In a further preferred embodiment one of the left-hand loop and right-hand loop is in each case wider than the other loop, wherein the narrower loops of the first conduit are arranged in each case in the wider loops of the second conduit and the narrower loops of the second conduit are arranged in each case in the wider loops of the first conduit.

In this embodiment a wide left-hand and right-hand loop are respectively alternated in each conduit with a narrow right-hand and left-hand loop. In the case of the wider loops the distance between the transversely extending conduit parts of the respective conduit is greater than the distance between the transversely extending conduit parts of the narrower loops of the same conduit.

In an advantageous embodiment according to the invention the first and second conduit are provided on either side of the carrier mat.

By providing the individual conduits on either side of the carrier mat they can be installed in a desired pattern in one operation. Crossing conduits are hereby for instance avoided. A further advantage can be achieved in a combined heating and cooling system, wherein heating conduits are provided on the carrier mat on a side directed upward during use and cooling conduits are provided on the carrier mat on a side directed downward during use. This is particularly advantageous when applied to intermediate floors or storey floors. It is hereby possible to utilize the mat both as floor heating for the one space and ceiling cooling for the other space.

It is noted that the conduits according to diverse embodiments can partially overlap each other or even be wholly aligned. This is particularly advantageous in combination with a mesh-like carrier, such as a metal mesh or a plastic mesh, since the conduits can then collectively be easily attached to the carrier mat by collectively attaching the conduits to the mat at positions where they cross/overlap each other, for instance by means of a braiding machine, a tacker device, a cable tie gun or cable tie tool, and/or the use of a hook and loop fastener machine, whereby hook and loop fastening tape is preferably applied from a roll in the case of a double meander form.

In an advantageous embodiment according to the invention at least some of the conduits are pressurized.

Each of the conduits can be pressurized by providing the outer ends thereof with a suitable shut-off valve, so that the pressurizing medium, such as air or water, is held in the conduit. The conduit is preferably pressurized with air, for instance compressed air. Pressurizing the conduit with air does not increase the weight of the conduit because of the pressurization. Because the conduit is filled with air and sealed, the conduit is less likely to be dented in the rolled-up state of the floor part. A relatively long floor part can hereby be rolled up without the conduit being damaged in the rolled-up state by the weight of the rolled-up package. The pressurizing medium can be sealed in diverse ways, such as with pressurizing caps or sealing caps. By making use according to the invention of an enlarged loop or folding loop the number of couplings required is greatly reduced. This makes the pressurizing considerably simpler and more efficient.

In a further advantageous embodiment according to the invention the floor heating mat is provided with an insulating layer.

Providing an insulating layer further improves the properties of the floor heating mat in respect of heat and/or cooling efficiency. In the case of a floor heating such an insulating mat can thus be attached to the underside of the carrier mat. Heat and/or cooling is hereby directed toward the desired side of the floor heating mat. The insulating mat preferably takes a roll-up form and is attached to the carrier mat beforehand under controlled (factory) conditions. If desired, it is also possible to arrange the insulating mat during installation.

A further embodiment according to the invention makes use of heating conduits on a side of the carrier mat which is directed upward during use and cooling conduits on a side of the carrier mat which is directed downward during use, in combination with an insulating layer arranged between the conduits. This enables an efficient temperature control.

The tubes are attached at multiple points to the carrier mat so that the tubes follow the desired pattern. An outer end of the tube, i.e. an end part of the relevant tube, is in this embodiment however not attached to the carrier mat so that this end part can be positioned freely relative to the carrier mat. This provides the flexibility required during installation. The free outer end can be used to couple tubes of adjacent floor parts or to couple the tubes to a manifold.

The invention further relates to a system comprising the prefabricated floor part as described above and moreover comprising mechanical tube couplings for coupling the outer ends of the tubes to a manifold or to other tubes of the floor heating or cooling.

Using the mechanical tube couplings the at least two tubes of the floor part can be connected to a manifold or to other tubes without the tube needing to be heated and without adhesive needing to be used. For coupling of the tubes use is for instance made of a sleeve fitting, for instance a compression sleeve fitting, or a crimp ring fitting.

In a further embodiment of the system the tubes of the floor part are each attached in a meander-shaped pattern to the carrier mat, wherein the outer ends of the tubes are coupled to the manifold of the floor heating or cooling such that in use the heat transport medium in the first tube flows from a first side of the carrier mat to a second side of the carrier mat, while the heat transport medium in the second tube flows from a second side of the carrier mat to the first side of the carrier mat.

In a further embodiment the system comprises a manifold connected to the first tube and the second tube, wherein the manifold is switchable between a first mode, in which the manifold allows heat transport medium to flow through both tubes, and a second mode in which the manifold allows heat transport medium to flow through only one of the tubes.

It becomes possible in this way to modify the capacity of the floor heating/cooling depending on the outdoor temperature. One of the tubes or both the tubes are for instance applied depending on the season. Use is optionally made here of electric heating lines.

It is preferably also possible to switch to a third mode in which the system is switched off so that the heat transport medium does not flow in either of the two tubes. In the case of a floor heating this may for instance be desirable in the summer. The invention can be applied effectively with conduits for different purposes, including in particular heating and/or cooling. It is also possible to apply conduits on the carrier mat for other purposes, for instance for electrics, water pipes and other installation purposes.

The invention further also relates to a floor heating and/or floor provided therewith, wherein the floor heating comprises a floor heating mat in the embodiment according to the invention, a manifold of an energy system and a coupling configured to couple conduits of the floor heating mat to the energy system.

Such a floor heating and/or floor provides the same advantages and effects as described for the floor heating mat.

The invention further also relates to a device for manufacturing a floor heating mat in an embodiment according to the invention.

Such a device provides the same advantages and effects as described for the floor heating mat, floor heating and/or floor. The device according to the invention is particularly suitable for manufacturing a prefab floor heating mat, particularly to specification of the intended application. Specifications of a house, apartment or building are preferably sent to the device and then converted into a production plan. Autocad drawings can preferably be read by the device in order to make such a production plan, wherein the floor heating mat which is produced comprises the desired sections and sub-sections for the floor heating. This achieves above stated advantages.

The invention further also relates to a method for manufacturing a floor heating mat, comprising the steps of:
- providing a device for manufacturing a floor heating mat in an embodiment according to the invention;
- determining dimensions and configuration of the floor heating mat;
- reading the determined dimensions and configuration;
- supplying conduit and mat to the device;
- arranging conduits on a mat in accordance with the dimensions and configuration; and
- removing the floor heating mat from the device,
wherein the determining of dimensions and configuration of the floor heating mat comprises of determining a transition to the subsequent sub-section and providing the enlarged loop at the position of the transition.

Such a method provides the same effects and advantages as described for the floor heating mat, floor heating, floor and/or device.

During manufacture of a floor heating mat a transition is in particular determined between different sub-sections, wherein an enlarged loop or folding loop is provided in the conduit at the position of this transition. This enables the cutting into and then folding away of the carrier mat and the conduits attached thereto.

In a preferred embodiment the reading of the determined dimensions and configuration comprises of:
- supplying the device with desired specifications of the intended location where the floor heating mat has to be arranged; and
- determining the desired production plan with a number of sections and/or sub-sections provided with the desired dimensions and configurations.

By supplying the desired specifications, for instance in the form of an Autocad drawing, a prefab for heating mat can be realized in effective manner under controlled conditions. A production plan is preferably determined here with which the different sections and sub-sections can be arranged on the carrier mat in effective manner by the device.

A prefabricated floor heating mat is then according to the invention transported and arranged at a desired location in a building, for instance a house, apartment or business premises. This arranging preferably comprises of positioning the floor heating mat in or on the ground surface, cutting into and folding the floor heating mat close to the transition, and continuing uninterrupted installation thereof in a different direction. The floor heating mat according to the invention can hereby be installed in the building in effective manner. The advantages already stated above are hereby realized in effective manner.

Further advantages, features and details of the invention are elucidated on the basis of exemplary embodiments thereof, wherein reference is made to the accompanying figures, in which:
- figure 1A shows a view of a floor heating mat according to the invention provided with two sub-sections;
- figure 1B shows a view of a floor heating mat of figure 1A after being cut into and folded away;
- figures 2A-C show diverse variants of the floor heating mat according to the invention;
- figures 3A-B show a view of a floor heating mat with conduits on respectively one and two sides of the carrier;
- figure 4 shows a schematic view of a floor heating system according to the invention;
- figure 5 shows a schematic overview of the processing steps of the embodiment of the method according to the invention;
- figure 6 shows a schematic overview of a device for manufacturing the floor heating mat according to the invention; and
- figure 7 shows a view of a device of figure 6.

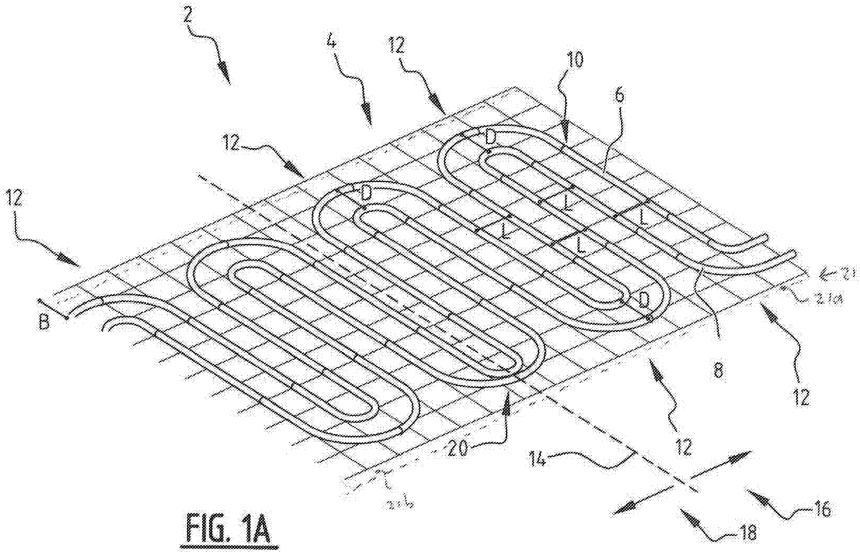

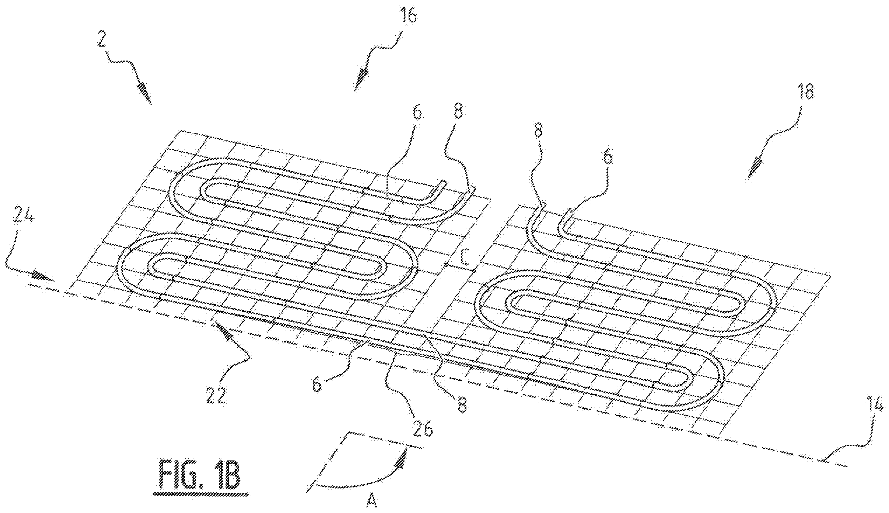

Floor heating mat 2 (Figures 1A, 1B) comprises a carrier mat 4 as mesh material to which first conduit 6 and second conduit 8 are secured using cable ties 10. In the longitudinal direction of carrier mat 4 conduits 6, 8 are arranged at mutual distance L and in transverse direction of mat 4 at mutual distance D in bends 12. Provided at transition 14 between the first sub-section 16 and second sub-section 18 is additional or extended or enlarged loop or folding loop 20, wherein first conduit 6 and second conduit 8 are positioned at a mutual distance smaller than the distance D. Free strip B is optionally provided at the side edges of carrier mat 4. Insulating mat 21 is optionally arranged on the underside of carrier mat 4. In the shown embodiment insulating mat 21 is provided from a first part 21a and second part 21b which can be divided at transition 14.

In the shown embodiment mat 2 is provided with first sub-section 16 and second sub-section 18 which are divided at transition 14 by cutting through mesh parts, whereby sub-sections 16, 18 are separated. In an embodiment cut mesh connections 22 comprise an outer cut mesh connection 24. In the shown embodiment (Figure 1B) inner mesh connection 26 has been left intact and is bent into bent mesh part 26. First and second sub-sections 16, 18 are then folded relative to each other in the direction A in the plane of mat 2 so that they extend parallel to each other in the shown embodiment. The individual paths of sub-sections 16, 18 need hereby not be coupled since first conduit 6 and second conduit 8 are able to continue. This is made possible by the bending of additional loop 20, wherein the distance C between two adjacently placed sub-sections 16, 18 is in the shown embodiment also determined by the length of bent mesh connection 26. Separate couplings for first conduit 6 and second conduit 8 at transition 14 are hereby not required. The optional insulating mat with parts 21 a,b can move along with sub-sections 16, 18.

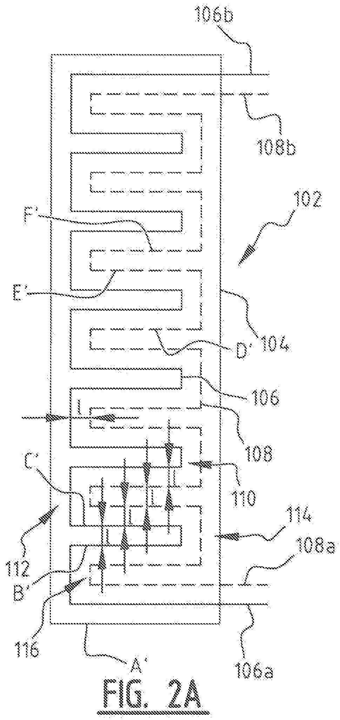

Prefabricated mat 102 comprises a rectangular carrier mat 104 (figure 2A). Attached to carrier mat 104 are a first conduit 106 and a second conduit 108. In the shown example conduits 106, 108 are manufactured from peroxide cross-linked polyethylene (PEX-A). Alternatively, the conduit can for instance be manufactured from PE-RT, another plastic, or a tube with an aluminium/ferro-alloy as core. Such a core has the additional advantage that the tube retains the desired shape better during application.

In the shown example conduits 106, 108 each have a length of about 140 metres. Other conduit lengths are likewise possible, although the length of each conduit is preferably a maximum of about 140 metres. In the shown example the conduit diameter is 10 mm, with a wall thickness of 1.1 mm. Other conduit dimensions are however also possible.

End parts 106a, 106b of conduit 106 and end parts 108a, 108b of conduit 108 are not attached to carrier mat 104 in the shown example, so that they have some freedom of movement, for instance for coupling to other conduits or to a manifold of the floor heating or cooling. In the shown example outer ends 106a, 106b, 108a, 108b extend outside carrier mat 104, this however being optional.

As shown in figure 2A, conduit 106 alternately comprises right-hand loops 110, i.e. loops which extend to the right, and left-hand loops 112, i.e. loops which extend to the left. Right-hand loop 110 comprises a bend to the left, while left-hand loop 112 comprises a bend to the right. Conduit 108 similarly comprises right-hand loops 114 and left-hand loops 116.

In the shown embodiment left-hand loops 112 of first conduit 106 are wider than right-hand loops 110 of the same conduit 106. In particular the distance between the transversely extending parts A' and B' of left-hand loops 112 is wider than the distance between the transversely extending parts B' and C' of right-hand loops 110. For second conduit 108 it is the case that right-hand loops 114 are wider than left-hand loops 116. In particular the distance between the transversely extending conduit parts D' and E' of right-hand loops 114 is wider than the distance between the transversely extending conduit parts E' and F' of left-hand loops 116.

In the shown example the transversely extending parts B' and C' of the narrower right-hand loops 110 of first conduit 106 lie at a distance "1" from each other. The smallest loops 116 of second conduit 108, i.e. left-hand loops 116, likewise have in the shown embodiment a centre-to-centre distance between the transversely extending parts E', F' with a length "1". Thus realized is that the distance between the transversely extending parts A', B', C', D', E', F' of conduits 106, 108 is always equal to "1". In other words, conduit parts A', B', C', D', E', F' extending in transverse direction are parallel to each other, or at least substantially parallel to each other.

It is noted that the alternating pattern of right-hand loops 110, 114 and left-hand loops 112, 116 can if desired differ at the outer ends of carrier mat 104 from the regular pattern described above.

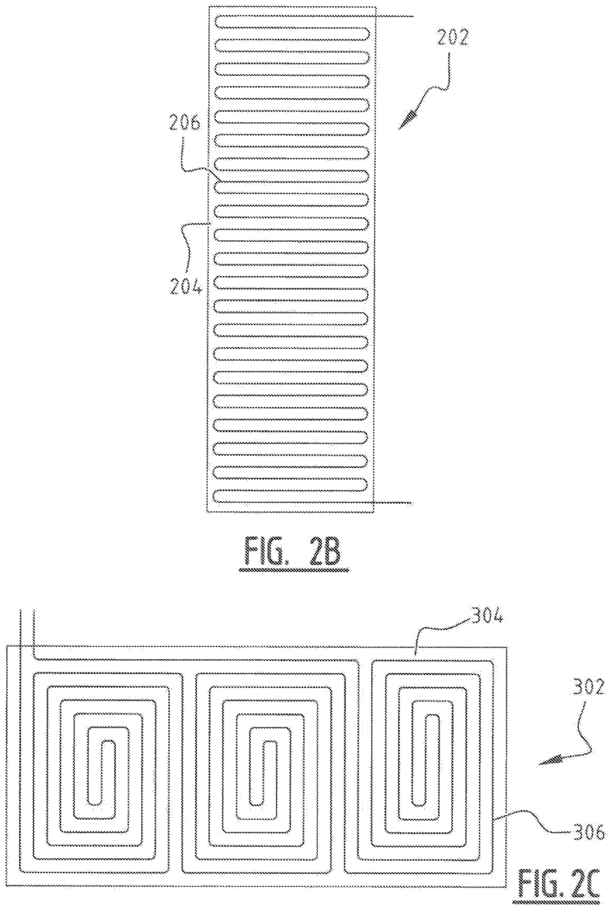

In an alternative embodiment of mat 202 a single conduit 206 is provided on or at carrier 204 in meander form (Figure 2B). A further alternative embodiment 302 (Figure 2C) shows a carrier mat 304 on which single conduit 306 is arranged in spiral form. It will be apparent that such a meander form or spiral form are also possible in an embodiment with two or even more conduits.

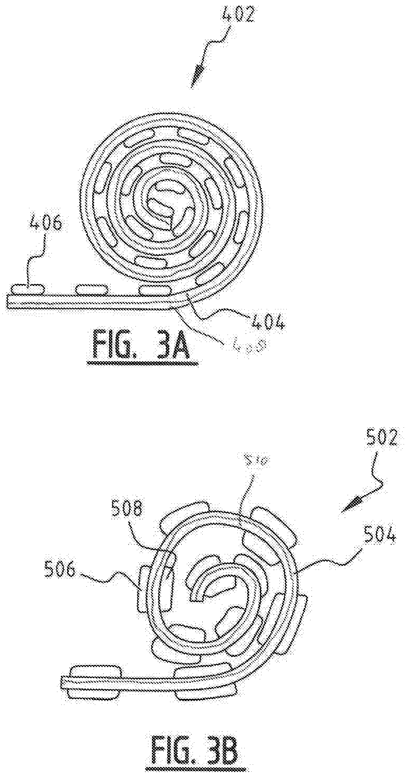

Rolled-up floor heating mat 402 (Figure 3A) shows a rolled-up carrier 404 with conduit or conduits 406 arranged thereon on one side and insulating mat 408 on the other side. In an alternative embodiment mat 502 (Figure 3B) is provided with rolled-up mat 504, wherein conduits 506, 508 are arranged on either side, optionally provided with optional insulating mat 510. Conduits 406, 506, 508 can be arranged in a meander configuration, spiral configuration or another configuration, which is not shown.

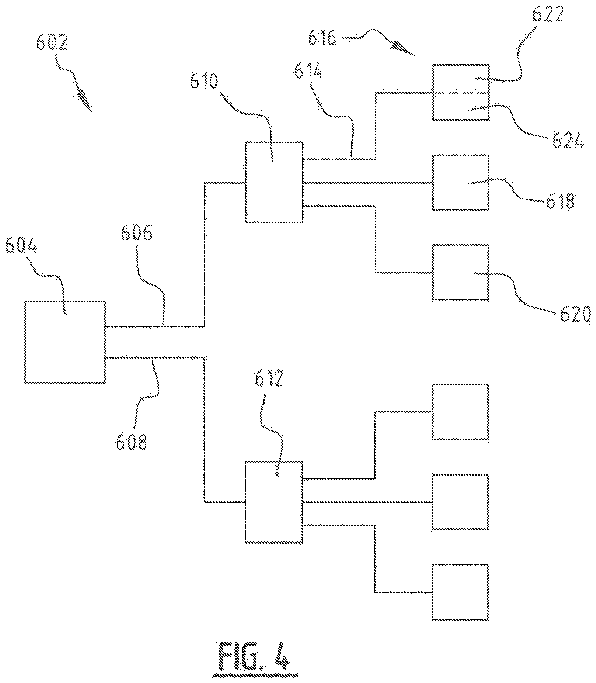

Heating and/or cooling system 602 (Figure 4) comprises source 604 which is operatively connected via conduits 606, 608 to respectively first manifold 610 and second manifold 612. It will be apparent that a different number of manifolds 610, 612 is also possible, depending on the building in which heating system 602 is installed. Heating or cooling liquid is distributed via conduits 614, which are shown schematically as a single line, to sections 616, 618 and 620 of first manifold 610. Optional other manifolds operate in similar manner. The embodiment shown here comprises a first section 616 which is divided into two sub-sections 622, 624, wherein sub-sections 622, 624 are operatively connected via the folding away of the floor heating mat (see also Figures 1A, 1B). It is optionally possible to use sub-sections 622, 624 for heating and/or cooling. Sub-section 622 can for instance be used for heating and sub-section 624 for cooling. Sub-sections 622, 624 can here be arranged on either side of the carrier mat, optionally with insulating layer 510 therebetween. This can for instance be advantageously applied in storey floors in apartment buildings. Sub-sections 622, 624 can here be controlled individually, optionally depending on the season.

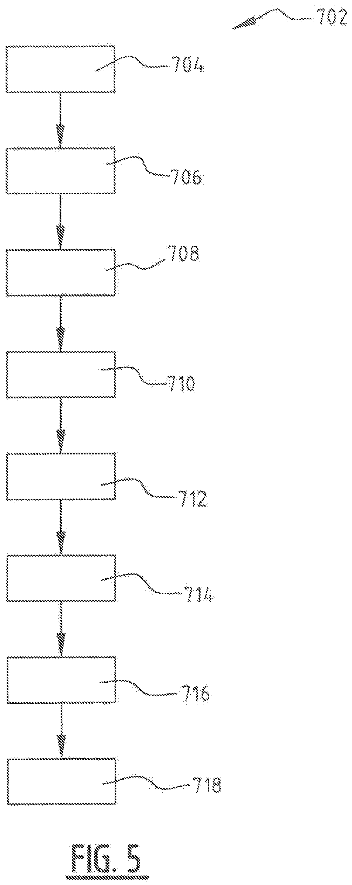

If a building has to be provided with a floor heating system, preferably also suitable for cooling, the method 702 (Figure 5) firstly comprises of designing 704 a floor heating mat with a number of sections and sub-sections. The specifications and other required data are for this purpose read in step 706. This reading can take place in an automated system which is operatively connected to the device or in a local system which is itself able to control a plurality of devices and optionally make an accompanying logistical plan. The reading for instance takes place by reading Autocad drawings of the building in question, after which the production plans are made, and the mat can be made with the additional loop 20 in production step 708. After production, the floor heating mat is stored and transported, preferably on a roll and optionally in pressurized state, in step 710. In step 712 the mat is then installed at the construction site in question, wherein the mat is cut into and folded where necessary on site in positioning step 714. An installer/user can here make use of the visual reference points which are arranged on the floor heating mat using additional loops. After positioning of the floor heating mat it is connected to other parts of system 602 in step 716. This connecting is simplified significantly with a mat according to the invention in that the number of couplings required is reduced significantly. After connection, use follows in step 718.

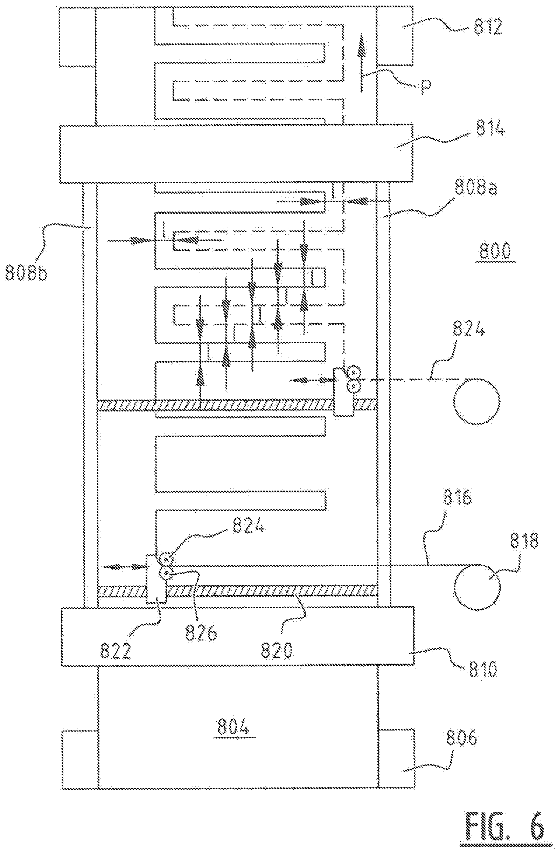

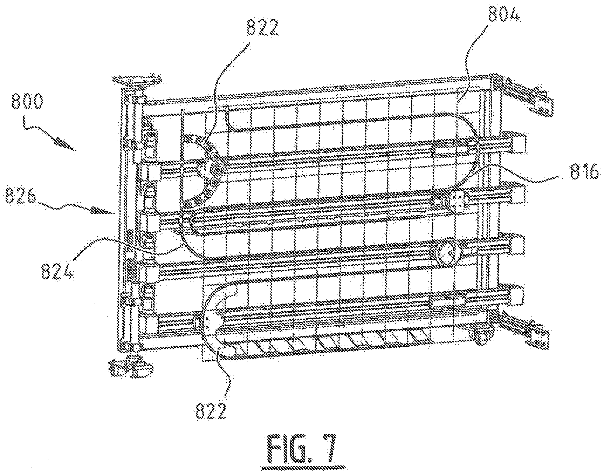

Machine 800 (figures 6, 7) comprises a roll 802 for the feed of a mesh-like carrier mat 804. For the sake of clarity in figure 6 the lattice of carrier mat 804 is not shown, although carrier mat 804 has in reality a mesh form.

Carrier mat 804 is guided from supply roll 806 to two conveyor belts 808a, 808b. A guide roller 810 is optionally provided to guide the carrier mat in the direction of conveyor belts 806a, 806b. Conveyor belts 806a, 806b are provided with studs so that the studs can hook into the meshes of the mesh-like carrier mat 804 in order to thus transport the mesh-like carrier mat 804. Carrier mat 804 is transported by conveyor belts 804a, 804b in the direction of the arrow P, after which carrier mat 804 is rolled up onto a roll 812. A guide roller 814 is optionally provided on this output side. Guide rollers 810, 814 contribute toward holding carrier mat 804 on the conveyor belt.

First conduit 816 is supplied from a roll 818. Arranged above the carrier mat is a rail 820 along which a carriage 822 can move reciprocally. The carriage is provided with one or more guide rollers 824, 826 which position conduit 816 on carrier mat 804.

Machine 800 moreover comprises a cable tie gun or braiding machine (not shown) or hook and loop fastener machine (not shown), wherein conduits are for instance placed on a hook and loop carrier mat by means of hook and loop fastening tape, for attaching to mesh-like carrier mat 804 the conduit 816 laid in transverse direction over carrier mat 804 by guide rollers 814, 816. The cable tie gun or the braiding machine is for instance likewise provided on carriage 822. The cable tie gun or the braiding machine can alternatively also be located on the other side of carrier mat 804 relative to the carriage for the purpose of attaching conduit 816 to mesh-like carrier mat 804 from this side.

Carriage 822 then moves in the opposite direction in order to place a new part of conduit 816 over the desired width on carrier mat 804, wherein the attaching means of the apparatus also attach this part of conduit 816 to carrier mat 804.

The optional second conduit 824 for the floor part/mat is arranged in similar manner on carrier mat 804.

In machine 800 carrier mat 804 is transported horizontally along the attaching means. It is however also possible to configure machine 800 (Figure 7) such that carrier mat 804 is transported vertically along the attaching means. The attaching means, such as a cable tie gun or a braiding machine or a hook and loop fastener machine, are in that case preferably provided on carriages 822 so that conduits 816, 824 can be attached immediately to carrier mat 804 while carriages 822 position conduits 816, 824 on carrier mat 804. In the shown embodiment, at the position of loop 826, the inner loop is automatically placed closer to or even against the outer loop in order to enable the folding at this position at a later stage in a manner shown in figures 1A, B. It will be apparent that in machine 800 further process steps can also be included and/or be provided in other alternative manner.

The rights sought are defined by the following claims, within the scope of which many modifications can be envisaged.

## Claims

1. Floor heating mat (2) for floor heating and/or cooling of a ground surface, comprising:
- a roll-up, cuttable carrier mat (4) provided with a plurality of sub-sections (16, 18) which lie at least partially adjacently of each other after being placed in or on the ground surface;
- a first conduit arranged on the carrier mat prior to placing of the carrier mat in or on a ground surface,
wherein the first conduit (6) is provided with an enlarged loop (20) at the position of a transition (14) to a subsequent sub-section of the floor heating mat (2), and
wherein the floor heating mat (2) can be cut into and folded at the position of the transition (14), such that, after placing, two adjacent sub-sections of a floor heating and/or cooling are connected by an uninterrupted and continuous conduit by means of the enlarged loop (20), further comprising a second conduit (8) arranged on the carrier mat (4) prior to placing of the carrier mat (4) in or on the ground surface, **characterized in that** the mutual distance (D) between the first conduit (6) and second conduit (8) at the enlarged loop (20) is smaller than the mutual distance (D) at other bends (12).

2. Floor heating mat (2) as claimed in claim 1, wherein the first and second conduits (6, 8) are provided meandering on the carrier mat (4) and wherein the conduits (6, 8) are arranged looped within each other.

3. Floor heating mat (2) as claimed in any of the foregoing claims, wherein the first and second conduits (6, 8) are provided on either side of the carrier mat (4).

4. Floor heating mat (2) as claimed in any of the foregoing claims, wherein the conduit (6,8) arranged on the carrier mat (4) is pressurized.

5. Floor heating mat (2) as claimed in any of the foregoing claims, wherein the carrier mat (4) is provided with a mesh or grid structure comprising longitudinal wires and transverse wires provided with a diameter in the range of 0.5 to 5.0 mm, preferably in the range of 1.0 to 3.0 mm.

6. Floor heating mat (2) as claimed in claim 5, wherein the diameter of the longitudinal wire is smaller than the diameter of the transverse wire.

7. Floor heating mat (2) as claimed in any of the foregoing claims, wherein the floor heating mat (2) is further provided with an insulating layer (510).

8. Floor heating mat (2) as claimed in any of the foregoing claims, further comprising a manifold (610, 612) connected to the first conduit (6) and the second conduit (8), wherein the manifold (610, 612) is switchable between a first mode, in which the manifold (610, 612) allows heat transport medium to flow through both conduits, and a second mode in which the manifold allows heat transport medium to flow through only one of the conduits.

9. Floor heating, comprising:
- a floor heating mat (2) as claimed in any of the foregoing claims;
- a manifold (610, 612) of an energy system; and
- a coupling configured to couple conduits of the floor heating mat (2) to the energy system.

10. Floor provided with a floor heating as claimed in claim 9.

11. Device for manufacturing a floor heating mat as claimed in any of the claims 1-8.

12. Method for providing a floor heating mat (2), the method comprising the steps of:
- providing a device (800) for manufacturing a floor heating mat (2) as claimed in any of the claims 1-8;
- determining dimensions and configuration of the floor heating mat (2);
- reading the determined dimensions and configuration;
- supplying conduit (6, 8) and mat (4) to the device;
- arranging conduits (6, 8) on a mat (4) in accordance with the dimensions and configuration, wherein the mutual distance (D) between the first conduit (6) and second conduit (8) at the enlarged loop (20) is smaller than the mutual distance (D) at other bends (12); and
- removing the floor heating mat (2) from the device (800),
wherein the determining of dimensions and configuration of the floor heating mat (2) comprises of determining a transition to the subsequent sub-section and providing the enlarged loop (20) at the position of the transition (14).

13. Method as claimed in claim 12, wherein the reading of the determined dimensions and configuration comprises of:
- supplying the device (800) with desired specifications of the intended location where the floor heating mat (2) has to be arranged; and
- determining the desired production plan with a number of sections and/or sub-sections provided with the desired dimensions and configurations.

14. Method as claimed in claim 12 or 13, further comprising the step of transporting and arranging the floor heating mat (2) at a desired location, and/or wherein arranging of the floor heating mat (2) at the desired location comprises of:
- positioning the floor heating mat (2) in or on the ground surface;
- cutting into and folding the floor heating mat (2) close to the transition; and
- continuing uninterrupted installation of the floor heating mat (2) in a different direction.

## Patentansprüche

1. Fußbodenheizmatte (2) für eine Fußbodenheizung und/oder -kühlung einer Bodenoberfläche, umfassend:
- eine schneidbare Aufrollträgermatte (4), versehen mit einer Vielzahl von Unterabschnitten (16, 18), die mindestens teilweise angrenzend aneinander liegen, nachdem sie in oder auf der Bodenoberfläche platziert wurden;
- eine erste Leitung, die vor einem Platzieren der Trägermatte in oder auf einer Bodenoberfläche auf der Trägermatte angeordnet ist,
wobei die erste Leitung (6) an der Position eines Übergangs (14) zu einem nachfolgenden Teilabschnitt der Fußbodenheizmatte (2) mit einer vergrößerten Schleife (20) versehen ist und
wobei die Fußbodenheizmatte (2) an der Position des Übergangs (14) derart eingeschnitten und gefaltet werden kann, dass nach dem Platzieren, zwei angrenzende Unterabschnitte einer Fußbodenheizung und/oder -kühlung über eine ununterbrochene und durchgehende Leitung mittels der vergrößerten Schleife (20) verbunden werden, ferner umfassend eine zweite Leitung (8), die vor dem Platzieren der Trägermatte (4) in oder auf der Bodenoberfläche auf der Trägermatte (4) angeordnet ist, **dadurch gekennzeichnet, dass** der gegenseitige Abstand (D) zwischen der ersten Leitung (6) und der zweiten Leitung (8) an der vergrößerten Schleife (20) kleiner als der gegenseitige Abstand (D) an anderen Biegungen (12) ist.

2. Fußbodenheizmatte (2) nach Anspruch 1, wobei die erste und die zweite Leitung (6, 8) auf der Trägermatte (4) mäandernd bereitgestellt sind und wobei die Leitungen (6, 8) ineinander geschlungen angeordnet sind.

3. Fußbodenheizmatte (2) nach einem der vorstehenden Ansprüche, wobei die erste und die zweite Leitung (6, 8) an beiden Seiten der Trägermatte (4) bereitgestellt sind.

4. Fußbodenheizmatte (2) nach einem der vorstehenden Ansprüche, wobei die Leitung (6,8), die auf der Trägermatte (4) angeordnet ist, unter Druck steht.

5. Fußbodenheizmatte (2) nach einem der vorstehenden Ansprüche, wobei die Trägermatte (4) mit einer Maschen- oder Gitterstruktur versehen ist, umfassend Längsdrähte und Querdrähte, die mit einem Durchmesser in dem Bereich von 0,5 bis 5,0 mm, vorzugsweise in dem Bereich von 1,0 bis 3,0 mm, versehen sind.

6. Fußbodenheizmatte (2) nach Anspruch 5, wobei der Durchmesser des Längsdrahts kleiner als der Durchmesser des Querdrahts ist.

7. Fußbodenheizmatte (2) nach einem der vorstehenden Ansprüche, wobei die Fußbodenheizmatte (2) ferner mit einer Isolierschicht (510) versehen ist.

8. Fußbodenheizmatte (2) nach einem der vorstehenden Ansprüche, ferner umfassend einen Verteiler (610, 612), der mit der ersten Leitung (6) und der zweiten Leitung (8) verbunden ist, wobei der Verteiler (610, 612) zwischen einem ersten Modus, in dem der Verteiler (610, 612) es ermöglicht, dass ein Hitzetransportmedium durch beide Leitungen fließt, und einem zweiten Modus, in dem der Verteiler es ermöglicht, dass das Hitzetransportmedium durch nur eine der Leitungen fließt, umschaltbar ist.

9. Fußbodenheizung, umfassend:
- eine Fußbodenheizmatte (2) nach einem der vorstehenden Ansprüche;
- einen Verteiler (610, 612) eines Energiesystems; und
- eine Kopplung, die konfiguriert ist, um Leitungen der Fußbodenheizmatte (2) mit dem Energiesystem zu koppeln.

10. Fußboden, versehen mit einer Fußbodenheizung nach Anspruch 9.

11. Vorrichtung zum Herstellen einer Fußbodenheizmatte nach einem der Ansprüche 1 bis 8.

12. Verfahren zum Bereitstellen einer Fußbodenheizmatte (2), das Verfahren umfassend die Schritte:
- Bereitstellen einer Vorrichtung (800) zum Herstellen einer Fußbodenheizmatte (2) nach einem der Ansprüche 1 bis 8;
- Bestimmen von Abmessungen und einer Konfiguration der Fußbodenheizmatte (2);
- Lesen der bestimmten Abmessungen und Konfiguration;
- Zuführen von Leitung (6, 8) und Matte (4) zu der Vorrichtung;
- Anordnen von Leitungen (6, 8) auf einer Matte (4) gemäß den Abmessungen und der Konfiguration, wobei der gegenseitige Abstand (D) zwischen der ersten Leitung (6) und der zweiten Leitung (8) an der vergrößerten Schleife (20) kleiner als der gegenseitige Abstand (D) an anderen Biegungen (12) ist; und
- Entfernen der Fußbodenheizmatte (2) von der Vorrichtung (800),
wobei das Bestimmen von Abmessungen und der Konfiguration der Fußbodenheizmatte (2) das Bestimmen eines Übergangs in den nachfolgenden Unterabschnitt und das Bereitstellen der vergrößerten Schleife (20) an der Position des Übergangs (14) umfasst.

13. Verfahren nach Anspruch 12, wobei das Lesen der bestimmten Abmessungen und Konfiguration umfasst:
- Zuführen der Vorrichtung (800) mit gewünschten Spezifikationen der beabsichtigten Stelle, wo die Fußbodenheizmatte (2) angeordnet werden muss; und
- Bestimmen des gewünschten Produktionsplans mit einer Anzahl von Abschnitten und/oder Unterabschnitten, versehen mit den gewünschten Abmessungen und Konfigurationen.

14. Verfahren nach Anspruch 12 oder 13, ferner umfassend den Schritt eines Transportierens und Anordnens der Fußbodenheizmatte (2) an einer gewünschten Stelle und/oder wobei das Anordnen der Fußbodenheizmatte (2) an der gewünschten Stelle umfasst:
- Positionieren der Fußbodenheizmatte (2) in oder auf der Bodenoberfläche;
- Einschneiden und Falten der Fußbodenheizmatte (2) nahe dem Übergang; und
- Fortsetzen einer ununterbrochenen Montage der Fußbodenheizmatte (2) in einer anderen Richtung.

## Revendications

1. Tapis chauffant de plancher (2) destiné au chauffage et/ou refroidissement de plancher d'une surface de sol, comprenant :
- un tapis de support qui peut être découpé et enroulé (4) pourvu d'une pluralité de sous-sections (16, 18) qui se situent au moins partiellement les unes à côté des autres après avoir été placées dans ou sur la surface de sol ;
- un premier conduit agencé sur le tapis de support avant la mise en place du tapis de support dans ou sur une surface de sol,
dans lequel le premier conduit (6) est pourvu d'une boucle élargie (20) au niveau de la position d'une transition (14) vers une sous-section suivante du tapis chauffant de plancher (2), et
dans lequel le tapis chauffant de plancher (2) peut être découpé et plié au niveau de la position de la transition (14), de telle sorte que, après mise en place, deux sous-sections adjacentes d'un chauffage et/ou refroidissement de plancher sont reliées par un conduit ininterrompu et continu au moyen de la boucle élargie (20), comprenant en outre un second conduit (8) agencé sur le tapis de support (4) avant la mise en place du tapis de support (4) dans ou sur la surface de sol,
**caractérisé en ce que** la distance mutuelle (D) entre le premier conduit (6) et le second conduit (8) au niveau de la boucle élargie (20) est inférieure à la distance mutuelle (D) au niveau d'autres coudes (12).

2. Tapis chauffant de plancher (2) selon la revendication 1, dans lequel les premier et second conduits (6, 8) sont fournis de manière sinueuse sur le tapis de support (4) et dans lequel les conduits (6, 8) sont agencés en boucle l'un dans l'autre.

3. Tapis chauffant de plancher (2) selon l'une quelconque des revendications précédentes, dans lequel les premier et second conduits (6, 8) sont fournis de chaque côté du tapis de support (4).

4. Tapis chauffant de plancher (2) selon l'une quelconque des revendications précédentes, dans lequel le conduit (6, 8) agencé sur le tapis de support (4) est mis sous pression.

5. Tapis chauffant de plancher (2) selon l'une quelconque des revendications précédentes, dans lequel le tapis de support (4) est pourvu d'une structure maillée ou grillagée comprenant des fils longitudinaux et des fils transversaux pourvus d'un diamètre dans la plage comprise entre 0,5 et 5,0 mm, de préférence dans la plage comprise entre 1,0 et 3,0 mm.

6. Tapis chauffant de plancher (2) selon la revendication 5, dans lequel le diamètre du fil longitudinal est inférieur au diamètre du fil transversal.

7. Tapis chauffant de plancher (2) selon l'une quelconque des revendications précédentes, dans lequel le tapis chauffant de plancher (2) est en outre pourvu d'une couche isolante (510).

8. Tapis chauffant de plancher (2) selon l'une quelconque des revendications précédentes, comprenant en outre un collecteur (610, 612) connecté au premier conduit (6) et au second conduit (8), dans lequel le collecteur (610, 612) est commutable entre un premier mode, où le collecteur (610, 612) permet à un milieu caloporteur de s'écouler à travers les deux conduits, et un second mode où le collecteur permet à un milieu caloporteur de s'écouler à travers un seul des conduits.

9. Chauffage de plancher, comprenant :
- un tapis chauffant de plancher (2) selon l'une quelconque des revendications précédentes ;
- un collecteur (610, 612) d'un système d'énergie ; et
- un couplage configuré pour coupler des conduits du tapis chauffant de plancher (2) au système énergétique.

10. Plancher pourvu d'un chauffage de plancher selon la revendication 9.

11. Dispositif de fabrication d'un tapis chauffant de plancher selon l'une quelconque des revendications 1 à 8.

12. Procédé destiné à fournir un tapis chauffant de plancher (2), le procédé comprenant les étapes consistant à :
- fournir un dispositif (800) de fabrication d'un tapis chauffant de plancher (2) selon l'une quelconque des revendications 1 à 8 ;
- déterminer les dimensions et la configuration du tapis chauffant de plancher (2) ;
- lire les dimensions et la configuration déterminées ;
- fournir un conduit (6, 8) et un tapis (4) au dispositif ;
- agencer des conduits (6, 8) sur un tapis (4) conformément aux dimensions et à la configuration, dans lequel la distance mutuelle (D) entre le premier conduit (6) et le second conduit (8) au niveau de la boucle élargie (20) est inférieure à la distance mutuelle (D) au niveau d'autres coudes (12) ; et
- retirer le tapis chauffant de plancher (2) du dispositif (800),
dans lequel la détermination des dimensions et de la configuration du tapis chauffant de plancher (2) comprend la détermination d'une transition vers la sous-section suivante et la fourniture de la boucle élargie (20) au niveau de la position de la transition (14).

13. Procédé selon la revendication 12, dans lequel la lecture des dimensions et de la configuration déterminées comprend :
- la fourniture, au dispositif (800), de spécifications souhaitées de l'emplacement prévu où le tapis chauffant de plancher (2) doit être agencé ; et
- la détermination du plan de production souhaité avec un nombre de sections et/ou de sous-sections pourvues des dimensions et configurations souhaitées.

14. Procédé selon la revendication 12 ou 13, comprenant en outre l'étape consistant à transporter et agencer le tapis chauffant de plancher (2) à un emplacement souhaité, et/ou dans lequel l'agencement du tapis chauffant de plancher (2) à l'emplacement souhaité comprend :
- le positionnement du tapis chauffant de plancher (2) dans ou sur la surface de sol ;
- la découpe et le pliage du tapis chauffant de plancher (2) à proximité de la transition ; et
- la poursuite d'une installation ininterrompue du tapis chauffant de plancher (2) dans un sens différent.
